# EUROPÄISCHE PATENTANMELDUNG

(11) **EP 1 238 846 A2**
(43) Veröffentlichungstag der Anmeldung: **11.09.2002**
(21) Anmeldenummer: 02075045.1
(22) Anmeldetag: 02.01.2002
(51) Int. Cl.: B60K 15/077

(54) **Einrichtung zur Sammlung von Kraftstoff**

(30) Priorität: 03.01.2001 DE 10117324
(71) Anmelder: SIEMENS AKTIENGESELLSCHAFT, 80333 München (DE)
(72) Erfinder: Dasbach, Burkhard, 60389 Frankfurt (DE); Kürmann, Ludger, 71696 Möglinen (DE); Grgec-Messner, Ivan, 65779 Kelkheim (DE)

(57) **Zusammenfassung**

Bei einer Einrichtung zur Sammlung von Kraftstoff in einem Kraftstoffbehälter (1) eines Kraftfahrzeuges ist oberhalb eines Schwalltopfes (4) ein ständig mit Kraftstoff gefüllter Behälter (9) angeordnet. Der Behälter (9) hat eine querschnittskleine Verbindung (11) mit dem Schwalltopf (4) zur Begrenzung eines vorgesehenen Volumenstroms. Der Behälter (9) stellt bei einer Quer- oder Längsbeschleunigung des Kraftfahrzeuges eine ausreichende Füllung des Schwalltopfes (4) sicher.

## Beschreibung

Die Erfindung betrifft eine Einrichtung zur Sammlung von Kraftstoff in einem Kraftstoffbehälter eines Kraftfahrzeuges mit einem zur Montage im Bodenbereich des Kraftstoffbehälters vorgesehenen Schwalltopf.

Solche Einrichtungen werden in heutigen Kraftfahrzeugen häufig eingesetzt und sind aus der Praxis bekannt. Die Einrichtungen sollen eine möglichst unterbrechungsfreie Versorgung einer Brennkraftmaschine des Kraftfahrzeuges sicherstellen. Bei der bekannten Einrichtung wird der Schwalltopf in der Regel mittels einer von der Brennkraftmaschine des Kraftfahrzeuges in den Kraftstoffbehälter zurückgeführten Rücklaufleitung und einer Saugstrahlpumpe mit Kraftstoff gefüllt. Hierdurch ist der Schwalltopf während des Betriebes der Brennkraftmaschine und bei Geradeausfahrt des Kraftstoffbehälters ausreichend mit Kraftstoff gefüllt.

Nachteilig bei der bekannten Einrichtung ist, dass bei starken Quer- oder Längsbeschleunigungen des Kraftfahrzeuges Kraftstoff aus dem Schwalltopf herausschwappen kann, so dass beispielsweise bei Kurvenfahrt der Schwalltopf vollständig entleert wird. Dies führt zu Unterbrechungen bei der Versorgung der Brennkraftmaschine mit Kraftstoff.

Der Erfindung liegt das Problem zugrunde, eine Einrichtung der eingangs genannten Art so zu gestalten, dass sie auch bei starken und anhaltenden Quer- und Längsbeschleunigungen eine zuverlässige Versorgung der Brennkraftmaschine mit Kraftstoff ermöglicht.

Dieses Problem wird erfindungsgemäß dadurch gelöst, dass ein mit dem Schwalltopf verbundener Behälter mit Kraftstoff befüllbar ist und dass der Behälter Mittel zur Führung eines vorgesehenen Volumenstroms an Kraftstoff in den Schwalltopf aufweist.

Durch diese Gestaltung ermöglicht die erfindungsgemäße Einrichtung ein Nachfüllen von Kraftstoff in den Schwalltopf. Eine bei starken und andauernden Quer- oder Längsbeschleunigungen des Kraftfahrzeuges aus dem Schwalltopf herausschwappende Kraftstoffmenge wird durch den aus dem Behälter dem Schwalltopf zugeführten Volumenstrom an Kraftstoff ausgeglichen. Daher ermöglicht die erfindungsgemäße Einrichtung auch bei langer und schneller Kurvenfahrt des Kraftfahrzeuges eine unterbrechungsfreie Kraftstoffversorgung der Brennkraftmaschine.

Die Führung des Volumenstroms an Kraftstoff aus dem Behälter in den Schwalltopf gestaltet sich gemäß einer vorteilhaften Weiterbildung der Erfindung konstruktiv besonders einfach, wenn der Behälter zur Anordnung oberhalb des Schwalltopfes vorgesehen ist.

Der dem Schwalltopf zugeführte Volumenstrom könnte beispielsweise über Schaltventile gesteuert werden. Der Volumenstrom lässt sich gemäß einer anderen vorteilhaften Weiterbildung der Erfindung einfach steuern, wenn die Verbindung des Behälters mit dem Schwalltopf einen zur Drosselung des Volumenstroms vorgesehenen Querschnitt aufweist.

Ein Auslaufen von Kraftstoff aus dem Behälter bei Stillstand oder Geradeausfahrt des Kraftfahrzeuges lässt sich gemäß einer anderen vorteilhaften Weiterbildung der Erfindung einfach vermeiden, wenn sie in einer vorgesehenen Ausrichtung des Behälters zur Vertikalen von einem Ventilkörper verschlossen ist und in sonstigen Ausrichtungen freigegeben ist.

Die Steuerung des dem Schwalltopf zugeführten Kraftstoffs in Abhängigkeit von der Quer- und Längsbeschleunigung des Kraftfahrzeuges gestaltet sich gemäß einer anderen vorteilhaften Weiterbildung der Erfindung konstruktiv besonders einfach, wenn der Ventilkörper als Kugel ausgebildet ist, wenn ein Ventilsitz zur Aufnahme des Ventilkörpers in verschlossener Stellung der Verbindung einen wesentlich kleineren Durchmesser hat als der Ventilkörper und wenn der Ventilsitz in einer im Verhältnis zum Ventilkörper großen Schale angeordnet ist.

Die Füllung des Behälters mit Kraftstoff lässt sich gemäß einer anderen vorteilhaften Weiterbildung der Erfindung einfach sicherstellen, wenn der Behälter Mittel zu seiner Verbindung mit einem Mischrohr einer innerhalb des Kraftstoffbehälters angeordneten Saugstrahlpumpe aufweist.

Bei Stillstand oder Geradeausfahrt des Kraftfahrzeuges wird gemäß einer anderen vorteilhaften Weiterbildung der Erfindung bei gefülltem Behälter eine ausreichende Versorgung des Schwalltopfes mit Kraftstoff sichergestellt, wenn der Behälter eine in Richtung des Schwalltopfes weisende Überlauföffnung hat.

Um ein Herausschwappen von Kraftstoff aus dem Behälter bei Quer- oder Längsbeschleunigung zu verhindern, kann der Behälter beispielsweise im Verhältnis zu seinem Querschnitt besonders tief gestaltet sein. Bei flachen Kraftstoffbehältern lässt sich ein Herausschwappen von Kraftstoff gemäß einer anderen vorteilhaften Weiterbildung der Erfindung einfach vermeiden, wenn der Behälter in seinem oberen Bereich einen Schwappschutz zur Vermeidung eines Herausschwappens von Kraftstoff hat. Ein solcher Schwappschutz kann insbesondere ein mit dem Behälter verklipster Deckel sein.

Ein schnelles Herauslaufen des von dem Behälter in den Schwalltopf geführten Kraftstoffs aus dem Schwalltopf lässt sich gemäß einer anderen vorteilhaften Weiterbildung der Erfindung einfach vermeiden, wenn die Verbindung des Behälters mit dem Schwalltopf bis zu einem Filter einer aus dem Schwalltopf ansaugenden Fördereinheit geführt ist. Hierdurch wird der Filter auch bei leerem Schwalltopf mit Kraftstoff benetzt.

Die erfindungsgemäße Einrichtung lässt sich besonders einfach in dem Kraftstoffbehälter montieren, wenn der Behälter und der Schwalltopf als bauliche Einheit gestaltet sind.

Die Erfindung lässt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig.1: einen Längsschnitt durch einen Kraftstoffbehälter mit einer Fördereinheit und einer erfindungsgemäßen Einrichtung,
- Fig.2: die erfindungsgemäße Einrichtung aus Figur 1 in einer stark vergrößerten Schnittdarstellung,
- Fig.3: eine weitere Ausführungsform der erfindungsgemäßen Einrichtung im Längsschnitt.

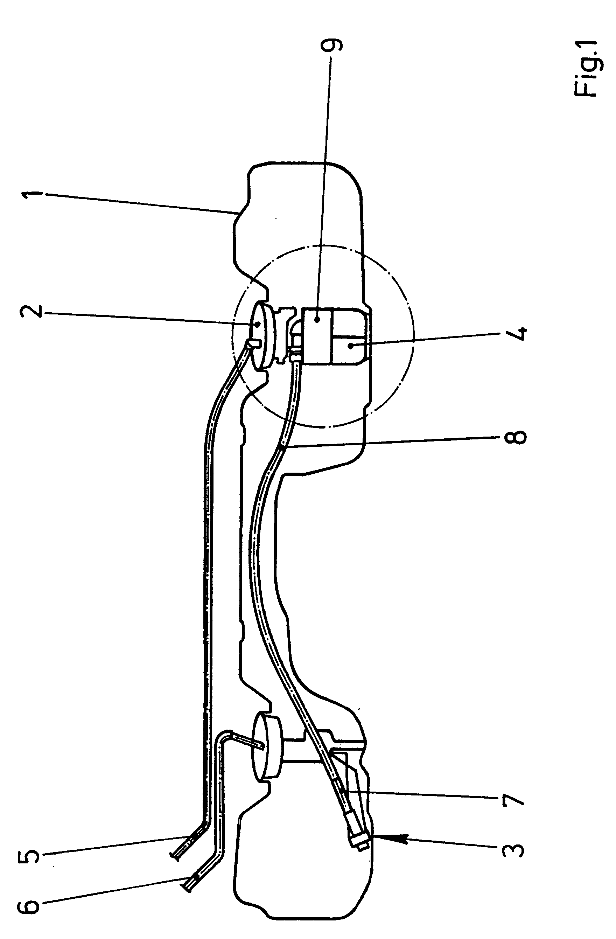

Figur 1 zeigt einen als Satteltank ausgebildeten Kraftstoffbehälter 1 für ein Kraftfahrzeug mit einer in einer Kammer angeordneten Fördereinheit 2. In der anderen Kammer ist eine Saugstrahlpumpe 3 angeordnet. Die Fördereinheit 2 fördert Kraftstoff aus einem Schwalltopf 4 über eine Vorlaufleitung 5 zu einer nicht dargestellten Brennkraftmaschine. Eine an der Brennkraftmaschine angeschlossene Rücklaufleitung 6 ist zu der Saugstrahlpumpe 3 geführt. Von einem Mischrohr 7 der Saugstrahlpumpe 3 führt eine Leitung 8 zu einem oberhalb des Schwalltopfes 4 angeordneten Behälter 9. Der Behälter 9 dient zum Sammeln des von der Saugstrahlpumpe 3 geförderten Kraftstoffs und der Zuführung des Kraftstoffs zu dem Schwalltopf 4.

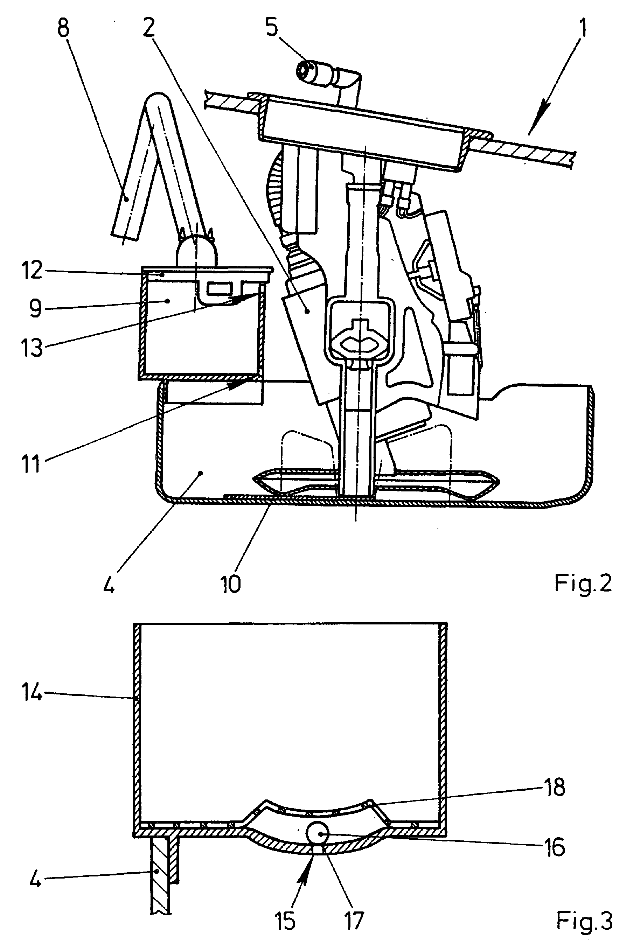

Figur 2 zeigt die Fördereinheit 2 mit dem Schwalltopf 4 und dem Behälter 9 aus Figur 1 in einer vergrößerten Schnittdarstellung. Die Fördereinheit 2 saugt durch einen im Bodenbereich des Schwalltopfes 4 angeordneten Filter 10 Kraftstoff aus dem Schwalltopf 4 an. Der oberhalb des Schwalltopfes 4 montierte Behälter 9 hat eine oberhalb des Filters 10 angeordnete, als Bohrung gestaltete Verbindung 11 mit dem Schwalltopf 4. Die Verbindung 11 hat einen zur Begrenzung eines vorgesehenen Volumenstroms vorgesehenen Drosselquerschnitt. Die Leitung 8, über die die Saugstrahlpumpe 3 aus Figur 1 Kraftstoff zu der Fördereinheit 2 fördert, mündet in den Behälter 9. Hierdurch wird sichergestellt, dass der Behälter 9 ständig mit Kraftstoff gefüllt ist. Der Behälter 9 ist mit einem Dekkel 12 verklipst. Eine in der Wandung des Behälters 9 angeordnete Überlauföffnung 13 ist oberhalb des Schwalltopfes 4 angeordnet, so dass der gesamte über die Leitung 8 anströmende Kraftstoff dem Schwalltopf 4 zugeführt wird. Bei einer Quer- oder Längsbeschleunigung, welche beispielsweise durch schnelles Kurvenfahren des Kraftfahrzeuges hervorgerufen wird, kann Kraftstoff aus dem Schwalltopf 4 herausschwappen. Dies führt jedoch nicht zu einer Unterbrechung der Förderung von Kraftstoff zu der Brennkraftmaschine, da gleichzeitig Kraftstoff aus dem Behälter 9 in den Schwalltopf 4 nachläuft.

Figur 3 zeigt einen Behälter 14 zur Sammlung des Kraftstoffs. Dieser unterscheidet sich von dem aus Figur 2 vor allem dadurch, dass eine zu dem Schwalltopf 4 geführte, als Öffnung ausgebildete Verbindung 15 in der eingezeichneten Stellung von einem Ventilkörper 16 verschlossen ist. Der Ventilkörper 16 ist als Kugel ausgebildet und hat einen wesentlich größeren Durchmesser als ein Ventilsitz 17 der Verbindung 15. Bei einer Quer- oder Längsbeschleunigung des Kraftfahrzeuges rollt der Ventilkörper 16 von dem Ventilsitz 17 weg und ermöglicht ein Überströmen des Kraftstoffs aus dem Behälter 14 in den darunter befindlichen Schwalltopf 4. Der Ventilkörper 16 wird zwischen einem Gitter 18 und dem Boden des Behälters 14 geführt.

## Patentansprüche

1. Einrichtung zur Sammlung von Kraftstoff in einem Kraftstoffbehälter eines Kraftfahrzeuges mit einem zur Montage im Bodenbereich des Kräftstoffbehälters vorgesehenen Schwalltopf, **dadurch gekennzeichnet, dass** ein mit dem Schwalltopf (4) verbundener Behälter (9, 14) mit Kraftstoff befüllbar ist und dass der Behälter (9, 14) Mittel zur Führung eines vorgesehenen Volumenstroms an Kraftstoff in den Schwalltopf (4) aufweist.

2. Einrichtung nach Anspruch 1, **dadurch gekennzeichnet, dass** der Behälter (9, 14) zur Anordnung oberhalb des Schwalltopfes (4) vorgesehen ist.

3. Einrichtung nach Anspruch 1 oder 2, **dadurch gekennzeichnet, dass** die Verbindung (11, 15) des Behälters (9, 14) mit dem Schwalltopf (4) einen zur Drosselung des Volumenstroms vorgesehenen Querschnitt aufweist.

4. Einrichtung nach zumindest einem der vorhergehenden Ansprüche, **dadurch gekennzeichnet, dass** die Verbindung (15) des Behälters (14) mit dem Schwalltopf (4) in einer vorgesehenen Ausrichtung des Behälters (14) zur Vertikalen von einem Ventilkörper (16) verschlossen ist und in sonstigen Ausrichtungen freigegeben ist.

5. Einrichtung nach zumindest einem der vorhergehenden Ansprüche, **dadurch gekennzeichnet, dass** der Ventilkörper (16) als Kugel ausgebildet ist, dass ein Ventilsitz (17) zur Aufnahme des Ventilkörpers (16) in verschlossener Stellung der Verbindung (15) einen wesentlich kleineren Durchmesser hat als der Ventilkörper (16) und dass der Ventilsitz (17) in einer im Verhältnis zum Ventilkörper (16) großen Schale angeordnet ist.

6. Einrichtung nach zumindest einem der vorhergehenden Ansprüche, **dadurch gekennzeichnet, dass** der Behälter (9, 14) Mittel zu seiner Verbindung mit einem Mischrohr (7) einer innerhalb des Kraftstoffbehälters (1) angeordneten Saugstrahlpumpe (3) aufweist.

7. Einrichtung nach zumindest einem der vorhergehenden Ansprüche, **dadurch gekennzeichnet, dass** der Behälter (9) eine in Richtung des Schwalltopfes (4) weisende Überlauföffnung (13) hat.

8. Einrichtung nach zumindest einem der vorhergehenden Ansprüche, **dadurch gekennzeichnet, dass** der Behälter (9) in seinem oberen Bereich einen Schwappschutz zur Vermeidung eines Herausschwappens von Kraftstoff hat.

9. Einrichtung nach zumindest einem der vorhergehenden Ansprüche, **dadurch gekennzeichnet, dass** die Verbindung (11, 15) des Behälters (9, 14) mit dem Schwalltopf (4) bis zu einem Filter (10) einer aus dem Schwalltopf (4) ansaugenden Fördereinheit (2) geführt ist.

10. Einrichtung nach zumindest einem der vorhergehenden Ansprüche, **dadurch gekennzeichnet, dass** der Behälter (9, 14) und der Schwalltopf (4) als bauliche Einheit gestaltet sind.
